# EUROPÄISCHE PATENTSCHRIFT

(11) **EP 1 514 741 B1**
(45) Veröffentlichungstag und Bekanntmachung des Hinweises auf die Patenterteilung: **02.04.2008**
(21) Anmeldenummer: 03020894.6
(22) Anmeldetag: 15.09.2003
(51) Int. Cl.: B60R 21/16

(54) **Vorrichtung und Verfahren zum Falten von Luftsäcken**
Apparatus and method for folding an air bag
Dispositif et procédé pour le pliage d'un sac de sécurité gonflable

(43) Veröffentlichungstag der Anmeldung: 16.03.2005
(73) Patentinhaber: Delphi Technologies, Inc., Troy, Michigan 48007 (US)
(72) Erfinder: Spinozzi, Claudio, 47809 Krefeld (DE); Dietz, Peter, Heinz, 42349 Wuppertal (DE); Lamberti, Ursula, 42369 Wuppertal (DE)
(74) Vertreter: Manitz, Finsterwald & Partner GbR

(56) Entgegenhaltungen:
- EP-A- 1 179 455
- EP-A- 1 293 395
- DE-A- 19 845 721
- PATENT ABSTRACTS OF JAPAN vol. 2003, no. 11, 5. November 2003 (2003-11-05) -& JP 2003 182493 A (NIPPON PLAST CO LTD), 3. Juli 2003 (2003-07-03)

## Beschreibung

Die Erfindung betrifft eine Vorrichtung sowie ein Verfahren zum Falten von Luftsäcken für Kraftfahrzeuge.

Das Falten von Luftsäcken und die weitere Handhabung der gefalteten Luftsäcke ist in der Praxis häufig zeitaufwendig, umständlich und teuer. Beispielsweise bei der Herstellung von auch als RRAB bezeichneten Seitenkopfairbags wird der Luftsack zunächst in einer ersten Vorrichtung in eine so genannte Z-Faltung überführt, anschließend auf eine Temperatur von beispielsweise etwa 130°C erwärmt und danach in einer Kühlanlage wieder abgekühlt, um die Z-Faltung des Luftsacks zu fixieren. Anschließend wird der gefaltete Luftsack in eine weitere Vorrichtung eingebracht, mit welcher er in eine auch als Strumpf bezeichnete Umhüllung gezogen wird.

Eine Vorrichtung gemäß dem Oberbegriff des Anspruchs 1 ist aus der EP-A-1 179 455 bekannt.

Die JP-A-2003-182493 offenbart eine Vorrichtung zum Falten eines Luftsacks mittels zweier Faltplatten, die jeweils aus mehreren Elementen gebildet sind, die filmscharnierartig miteinander verbunden sind. Zur Faltung des Luftsacks wird dieser ausgebreitet zwischen den Faltplatten angeordnet. Anschließend werden die Faltplatten unter ziehharmonikaartigem Umklappen der Elemente zusammen geschoben.

Es ist das der Erfindung zugrunde liegende Problem (Aufgabe), die Herstellung von Luftsackmodulen zu vereinfachen, wobei insbesondere die Herstellung einer definierten Luftsackfaltung auf möglichst einfache Weise durchführbar und sowohl die Beibehaltung der Luftsackfaltung als auch eine möglichst einfache Handhabung des gefalteten Luftsacks sichergestellt sein soll.

Die Lösung dieser Aufgabe erfolgt durch die Merkmale des eine Faltvorrichtung betreffenden Anspruchs 1 und insbesondere dadurch, dass die Vorrichtung eine sich ausgehend von einem Eintrittsbereich für einen zumindest teilweise ausgebreiteten zu faltenden Luftsack in Richtung eines Austrittsbereiches für den gefalteten Luftsack verkleinernde Faltkammer umfasst, die in einer Benutzungskonfiguration einander gegenüber liegende und jeweils von einer unveränderlichen Rippenstruktur gebildete Innenseiten umfasst, deren Rippen im Austrittsbereich der Faltkammer eine die Luftsackfaltung festlegende Austrittsdüse für den durch die Faltkammer bewegten Luftsack bilden, wobei die Höhe zumindest einiger Rippen in Richtung des Austrittsbereiches zunimmt.

Mit Hilfe der erfindungsgemäßen Vorrichtung wird der zu faltende Luftsack automatisch in die jeweils gewünschte Faltkonfiguration gebracht, wenn der zunächst zumindest teilweise ausgebreitete Luftsack durch die Faltkammer bewegt, beispielsweise gezogen, wird. Die Rippen im Austrittsbereich der z.B. in der Breite abnehmenden oder sich verjüngenden Faltkammer legen die Luftsackfaltung fest, so dass der aus der Austrittsdüse der Faltkammer austretende Luftsack die gewünschte Faltung aufweist und anschließend direkt weiterbehandelt werden kann, indem der gefaltete Luftsack beispielsweise einer der Faltkammer unmittelbar nachgeordneten Umhüllungseinrichtung zugeführt wird, mit welcher der aus der Austrittskammer kommende gefaltete Luftsack direkt in eine auch als Strumpf bezeichnete Umhüllung eingeführt wird, die entsprechend dem Querschnitt der Luftsackfaltung bemessen ist. Die erfindungsgemäße Vorrichtung kann so in Form einer kombinierten Falt- und Strumpfeinführvorrichtung vorgesehen sein.

Bevorzugte Ausführungsformen sind auch in den Unteransprüchen, der Beschreibung sowie der Zeichnung angegeben.

Vorzugsweise verlaufen die Rippen geradlinig, wobei insbesondere vorgesehen sein kann, dass sich zumindest einige Rippen vom Eintrittsbereich bis zum Austrittsbereich und somit über die gesamte Länge der Faltkammer erstrecken.

Des Weiteren wird erfindungsgemäß vorgeschlagen, dass sich mehrere und insbesondere alle Rippen bis in den Austrittsbereich erstrecken, so dass die Rippen aufgrund der sich verkleinernden Faltkammer in Richtung des Austrittsbereiches aufeinander zu laufen.

Senkrecht zur Bewegungsrichtung des Luftsacks gesehen kann die Rippendichte im Austrittsbereich größer sein als im Eintrittsbereich.

Insbesondere sind die Rippenstrukturen jeweils fächerartig ausgebildet.

Um das Einführen des zu faltenden Luftsacks in die Faltkammer zu erleichtern, kann der Eintrittsbereich zwischen den Rippenstrukturen eine sich über die gesamte Breite der Faltkammer erstreckende, beispielsweise spalt- oder schlitzförmige Einführöffnung für den Luftsack aufweisen.

Die Faltkammer bzw. die Rippenstrukturen sind vorzugsweise derart ausgebildet, dass die letztlich durch die von den Rippen definierte Austrittsdüse festgelegte Luftsackfaltung eine Z-Faltung ist. Insbesondere kann die Faltkammer derart ausgebildet sein, dass sich der zu faltende Luftsack zumindest am Austrittsbereich der Faltkammer mäanderartig zwischen den Rippen hindurch "schlängelt".

Die Rippenstrukturen können gegeneinander versetzt angeordnet sein, insbesondere derart, dass jeweils einer Erhöhung bzw. einem "Berg" eine Vertiefung bzw. ein "Tal" gegenüberliegt.

In einem weiteren bevorzugten Ausführungsbeispiel der Erfindung liegen die Rippenstrukturen einander überlappungsfrei gegenüber. Ein Ineinandergreifen oder eine Verzahnung der einander gegenüber liegenden Rippenstrukturen erfolgt hierbei also nicht.

Alternativ kann vorgesehen sein, dass die Rippenstrukturen zumindest im Austrittsbereich der Faltkammer ineinander greifen oder miteinander verzahnt sind.

Ferner wird erfindungsgemäß vorgeschlagen, dass zumindest bei einer der Rippenstrukturen in jeder senkrecht zur Bewegungsrichtung des Luftsacks verlaufenden Querschnittsebene die Rippen die gleiche Höhe aufweisen.

Alternativ kann vorgesehen sein, dass zumindest im Austrittsbereich die Rippen eine unterschiedliche Höhe aufweisen.

In einem besonders bevorzugten Ausführungsbeispiel der Erfindung ist bei jeder der beiden einander gegenüber liegenden Rippenstrukturen eine Mehrzahl von Rippen vorgesehen, die sich vom Eintrittsbereich der Faltkammer bis zu deren Austrittsbereich erstrecken und derart fächerartig angeordnet sind, dass ausgehend vom Eintrittsbereich in Richtung des Austrittsbereiches die Breite jeder Rippe zugunsten ihrer Höhe abnimmt, wodurch die im Eintrittsbereich noch zumindest näherungsweise flach liegende Luftsackhülle während ihrer Bewegung durch die Faltkammer in Richtung des Austrittsbereiches immer weiter aufgestellt wird, bis an der von den Rippen gebildeten Austrittsdüse der Faltkammer die entsprechende Luftsackfaltung vorliegt. Dabei kann insbesondere vorgesehen sein, dass die Höhe der Rippen stetig zunimmt, d.h. die Rippen gewissermaßen rampenartig verlaufen.

Erfindungsgemäß ist nicht zwingend erforderlich, dass es sich bei den Rippen um in Längsrichtung durchgehende Erhöhungen handelt. Anstelle von durchgehenden Rippen können prinzipiell auch rippenartige Strukturen in Form von mehreren hintereinander mit Abstand voneinander angeordneten diskreten Erhöhungen vorgesehen sein, wobei auch derartige Strukturen Rippen im Sinne der vorliegenden Anmeldung sind.

Die Rippenstrukturen können erfindungsgemäß an separaten Falteinsätzen oder als separate Falteinsätze ausgebildet sein, die zur Bildung der Faltkammer in eine Halterung oder einen Träger eingesetzt werden können.

Dabei kann eine Mehrzahl von Falteinsätzen vorgesehen sein, die sich hinsichtlich ihrer Rippenstruktur voneinander unterscheiden, insbesondere hinsichtlich des senkrecht zur Bewegungsrichtung des Luftsacks verlaufenden Höhenprofils der Rippen.

Auf diese Weise kann eine einzige Faltvorrichtung zur Herstellung unterschiedlicher Luftsackfaltungen verwendet werden, indem einfach die entsprechenden Falteinsätze ausgewählt und an den für die Falteinsätze vorgesehenen Halterungen bzw. Trägern der Faltkammer angebracht werden.

Der Faltkammer kann eine Umhüllungseinrichtung nachgeordnet sein, mit welcher der aus der Austrittsdüse kommende gefaltete Luftsack direkt in eine entsprechend dem Querschnitt der Luftsackfaltung bemessene, den gefalteten Zustand des Luftsacks fixierende Umhüllung einführbar ist.

Ein vorteilhaftes, insbesondere mit einer erfindungsgemäßen Faltvorrichtung durchführbares Verfahren zum Falten von Luftsäcken für Kraftfahrzeuge zeichnet sich gemäß dem unabhängigen Verfahrensanspruch 17 dadurch aus, dass ein zumindest teilweise ausgebreiteter zu faltender Luftsack durch eine sich ausgehend von einem Eintrittsbereich für den zu faltenden Luftsack in Richtung eines Austrittsbereiches für den gefalteten Luftsack verkleinernde Faltkammer bewegt wird, die in einer Benutzungskonfiguration einander gegenüber liegende und jeweils von einer unveränderlichen Rippenstruktur gebildete Innenseiten umfasst, deren Rippen im Austrittsbereich der Faltkammer eine die Luftsackfaltung festlegende Austrittsdüse für den durch die Faltkammer bewegten Luftsack bilden wobei die Höhe zumindest einiger Rippen in Richtung des Austrittsbereiches zunimmt.

Vorzugsweise kann bei diesem Verfahren der aus der Austrittskammer kommende gefaltete Luftsack in einer der Faltkammer nachgeordneten Umhüllungseinrichtung direkt in eine entsprechend dem Querschnitt der Luftsackfaltung bemessene, den gefalteten Zustand des Luftsacks fixierende Umhüllung eingeführt werden.

Die Erfindung wird im Folgenden beispielhaft unter Bezugnahme auf die Zeichnung beschrieben. Es zeigen:
- Fig. 1: eine Ausführungsform einer erfindungsgemäßen Faltvorrichtung im geöffneten Zustand mit einem ausgebreiteten zu faltenden Luftsack,
- Fig. 2: die Faltvorrichtung von Fig. 1 im geschlossenen Zustand mit gefaltetem Luftsack,
- Fig. 3: eine Draufsicht auf die geöffnete Faltvorrichtung von Fig. 1 mit einer Querschnittsansicht im Eintrittsbereich sowie einer weiteren, ergänzten Querschnittsansicht im Austrittsbereich der Faltvorrichtung, und
- Fig. 4 - 7: verschiedene weitere Ansichten der Faltvorrichtung von Fig. 1.

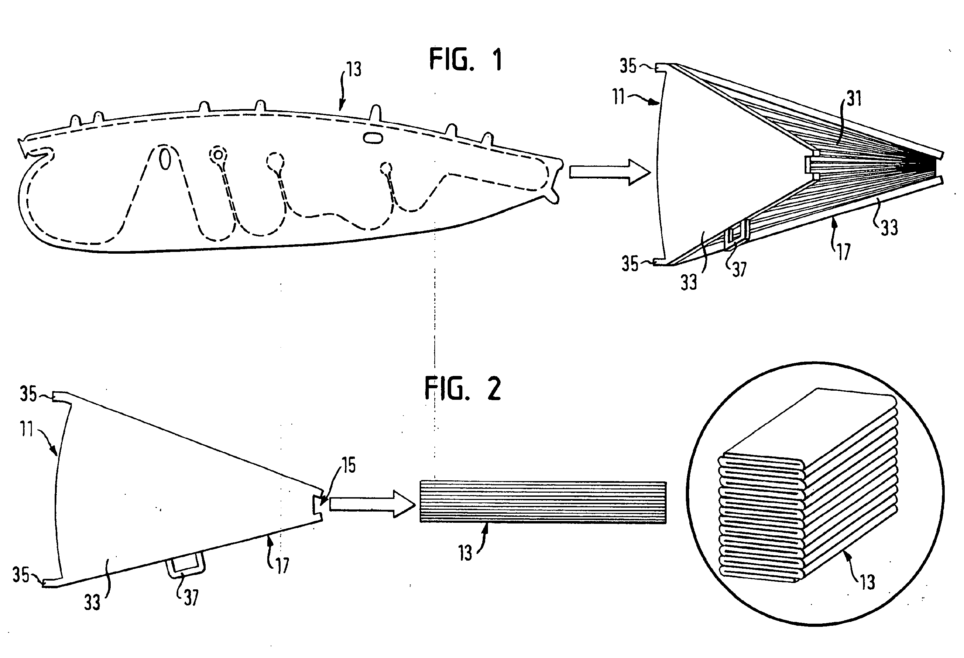

Die in Fig. 1 im geöffneten Zustand dargestellte erfindungsgemäße Faltvorrichtung umfasst zwei gelenkig miteinander verbundene, kreissektorförmige Träger 33. Die gelenkige Verbindung der beiden Träger 33 erfolgt durch zwei Schamierabschnitte 35, die seitlich außen an der breiteren, einen Eintrittsbereich 11 für einen zu faltenden Luftsack 13 bildenden Seite der Vorrichtung gelegen sind. Zum Öffnen und Schließen der Faltvorrichtung ist der in Fig. 1 obere Träger 33 mit einem Griff 37 versehen.

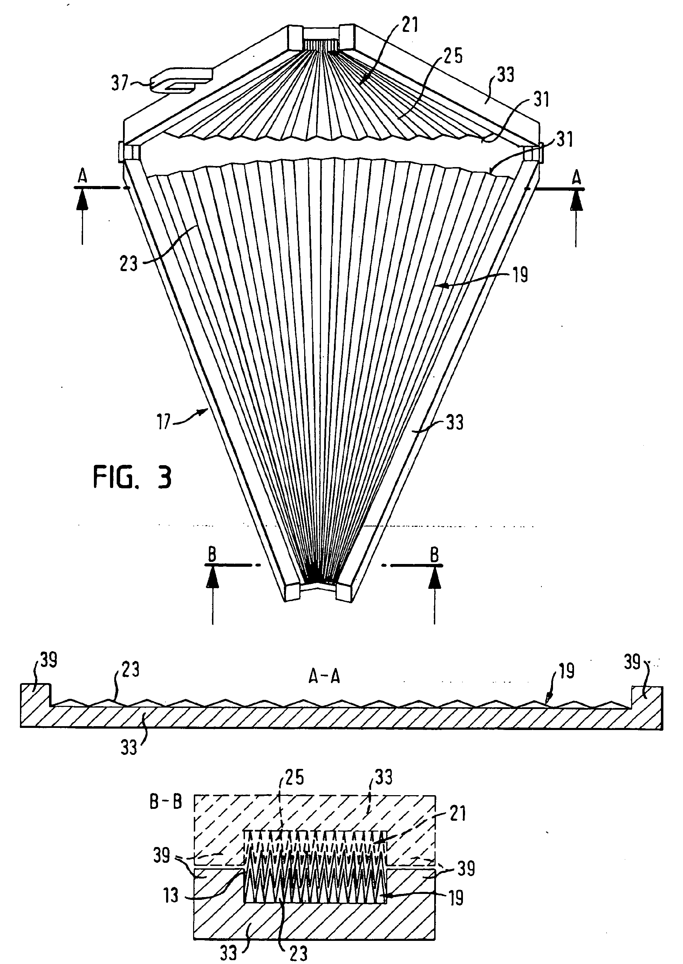

Die Träger 33 dienen zur Aufnahme und Halterung fächerartig ausgebildeter Falteinsätze 31, von denen in Fig. 1 lediglich der dem unteren Träger 33 zugeordnete Falteinsatz 31 dargestellt ist. Auf den Aufbau der Falteinsätze 31 wird nachstehend insbesondere in Verbindung mit Fig. 3 näher eingegangen.

Bei dem in Fig. 1 im ausgebreiteten Zustand dargestellten Luftsack 13 handelt es sich um den Luftsack einer Seitenkopfairbag-Anordnung. Dieser Luftsack 13 stellt jedoch lediglich ein Beispiel für einen mittels der erfindungsgemäßen Faltvorrichtung zu faltenden Luftsack dar. Grundsätzlich können beliebig ausgestaltete Luftsäcke mittels der erfindungsgemäßen Faltvorrichtung gefaltet werden.

Fig. 2 zeigt die Faltvorrichtung im geschlossenen Zustand, in dem sich die Träger 33 in ihrer Benutzungskonfiguration befinden und eine Faltkammer 17 definieren, die in diesem Ausführungsbeispiel seitlich geschlossen, am vorderen Eintrittsbereich 11 sowie an einem hinteren Austrittsbereich 15, auf den nachstehend näher eingegangen wird, offen und an den beiden anderen, einander gegenüber liegenden Innenseiten von den an den Trägern 33 angebrachten Falteinsätzen 31 begrenzt ist.

Durch die nachstehend beschriebene Struktur der Falteinsätze 31 ist die Faltkammer 17 derart ausgebildet, dass der Luftsack 13 durch Hindurchführen durch die Faltkammer 17 gewissermaßen von selbst zu einem lang gestreckten Paket gefaltet wird, das bei der hier beschriebenen Ausgestaltung der Falteinsätze 31 eine homogene Z-Faltung aufweist, wie es insbesondere die vergrößerte Darstellung des gefalteten Luftsacks 13 ganz rechts in Fig. 2 zeigt.

Fig. 3 zeigt die fächerartige Struktur der Falteinsätze 31, die jeweils eine Rippenstruktur 19, 21 aus sich vom Eintrittsbereich 11 bis zum Austrittsbereich 15 der Faltkammer 17 erstreckenden Rippen 23, 25 aufweisen, welche aufgrund der schmaler werdenden Faltkammer 17 vom Eintrittsbereich 11 zum Austrittsbereich 15 zugunsten ihrer Höhe in der Breite abnehmen. Am Beispiel der Rippenstruktur 19 des in Fig. 3 unteren Falteinsatzes 31 ist dies durch die unterschiedlich stark vergrößerten Querschnittsdarstellungen A-A am Eintrittsbereich 11 und B-B am Austrittsbereich 15 deutlich erkennbar.

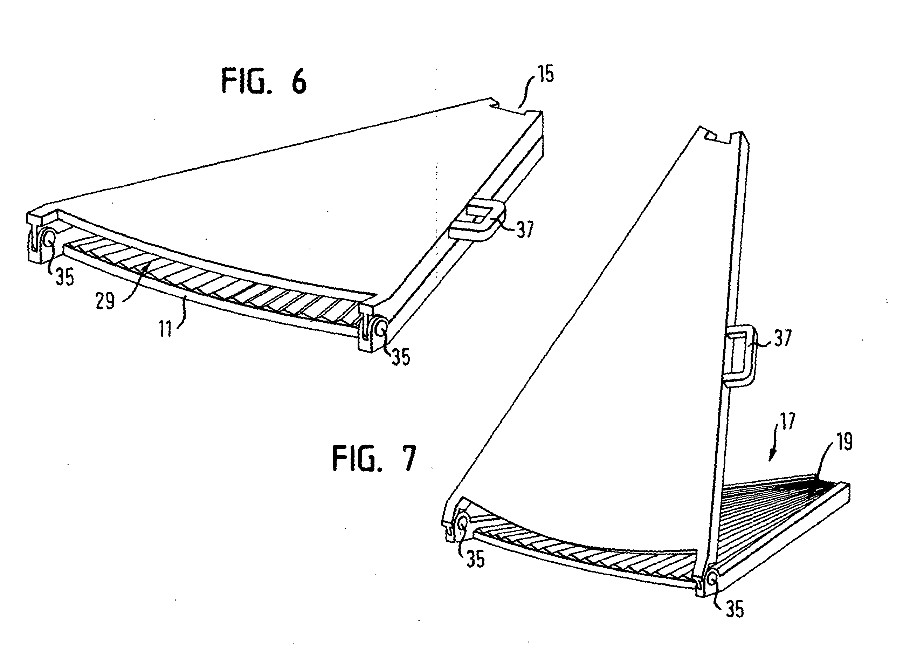

Diese Darstellungen zeigen außerdem, dass am Eintrittsbereich 11 die Rippen 23 eine geringere Höhe aufweisen als die Seitenwände 39 des Trägers 33. Am Austrittsbereich 15 dagegen entspricht die Höhe der Rippen 23 etwa der Höhe der Seitenwände 39. Daher ist bei geschlossener Faltkammer 17 im Eintrittsbereich 11 eine spaltförmige Einführöffnung 29 (vgl. Fig. 6) zwischen den Falteinsätzen 31 vorhanden, wohingegen am Austrittsbereich 15 zwischen den Rippen 23, 25 kein oder allenfalls ein kleiner Zwischenraum vorhanden ist, d.h. die Rippenstrukturen 19, 21 auch am Austrittsbereich 15 überlappungsfrei einander gegenüber liegen.

Ein Ineinandergreifen oder eine Verzahnung zwischen den Rippen 23 des unteren Trägers 33 und den Rippen 25 des oberen Trägers 33 erfolgt in diesem Ausführungsbeispiel also nicht. Grundsätzlich wäre dies jedoch zumindest am Austrittsbereich 15 möglich.

Die Rippenstruktur 19 des unteren Trägers 33 und die Rippenstruktur 21 des oberen Trägers 33 sind derart gegeneinander versetzt angeordnet, dass bei geschlossener Faltkammer 17 jeweils eine Erhöhung der einen Rippenstruktur 19, 21 einer Vertiefung der anderen Rippenstruktur 21, 19, d. h. jeweils ein "Berg" einem "Tal" gegenüber liegt. Hierdurch ergibt sich am Austrittsbereich 15 - im Querschnitt und über die Breite der Faltkammer 17 betrachtet - ein mäanderförmiger Verlauf des Luftsacks 13 zwischen den Rippen 23, 25. Dies ist durch die zum Teil in gestrichelten Linien dargestellte Ergänzung der entsprechenden Querschnittsansicht B-B in Fig. 3 gezeigt.

Am Austrittsbereich 15 der Faltkammer 17 kann die von den Rippen 23, 25 gebildete Struktur daher als eine Austrittsdüse 27 der Faltkammer 17 bezeichnet werden, durch welche die Art und Weise der Luftsackfaltung eindeutig festgelegt ist. Von der homogenen Z-Faltung gemäß Fig. 2 abweichende Luftsackfaltungen können durch entsprechend geänderte Düsen 27 bzw. Rippenstrukturen 19, 21 erzielt werden. So können beispielsweise abweichend von der dargestellten Ausführungsform die Rippen 23, 25 in jeder Querschnittsebene oder zumindest am Austrittsbereich 15 eine unterschiedliche Höhe aufweisen. Ferner kann von der stetigen, zu Lasten der Rippenbreite gehenden Zunahme der Rippenhöhe in Richtung des Austrittsbereiches 15 abgewichen werden.

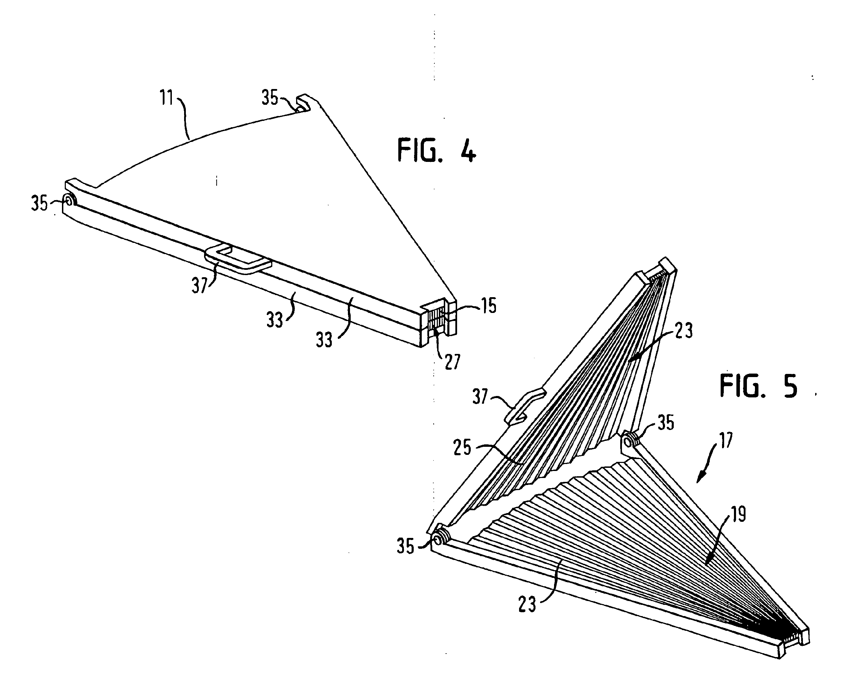

Bei den Darstellungen der erfindungsgemäßen Faltvorrichtung in den Fig. 4 - 7 zeigt Fig. 6 insbesondere die bereits erwähnte schlitzförmige Einführöffnung 29 der Faltkammer 17, während Fig. 4 die im Vergleich zur Einführöffnung 29 eine wesentlich geringere Breite aufweisende Austrittsdüse 27 des Austrittsbereiches 15 zeigt, wobei in den Fig. 5 und 7 die Vorrichtung jeweils mit geöffneter Faltkammer 17 dargestellt ist.

Bei dem hier dargestellten Ausführungsbeispiel der erfindungsgemäßen Faltvorrichtung erfolgt das Einführen des zu faltenden Luftsacks 13 (vgl. Fig. 1) über die am Eintrittsbereich 11 gelegene Einführöffnung 29 bei geöffneter Faltkammer 17, um das vordere Ende des Luftsacks 13 zum Hindurchziehen durch die Faltkammer 17 ergreifen zu können.

Alternativ kann die Faltkammer 17 an zumindest einer Seite offen ausgeführt werden, wodurch es z. B. ermöglicht wird, einen bereits mit einer als Gasverteilungsrohr dienenden Lanze versehenen Luftsack 13 zu falten, indem ein mit der Lanze versehener Randbereich des Luftsacks 13 außerhalb der Faltkammer 17 an dieser entlang geführt und dabei an diesem außen liegenden Randbereich gehalten wird.

Das Falten eines bereits mit einer Lanze versehenen Luftsacks 13 kann erfindungsgemäß aber auch bei seitlich geschlossener Faltkammer 17 erfolgen. Hierzu kann die Faltkammer 17 an der entsprechenden Innenseite an die Lanze angepasst ausgebildet und z.B. mit einer passend geformten Nut oder Rinne versehen sein, in der die Lanze beim Hindurchführen des Luftsacks 13 durch die Faltkammer 17 läuft.

Erfindungsgemäß kann aber auch vorgesehen sein, dass der Luftsack 13 ohne Lanze gefaltet und die Lanze erst im Anschluss an den Faltvorgang, d.h. nach dem Austreten des gefalteten Luftsacks 13 aus der Faltkammer 17, mit dem Luftsack 13 verbunden wird.

Die am Randbereich 11 noch relativ flach auf der unteren Rippenstruktur 19 (vgl. Querschnittsdarstellung A-A in Fig. 3) liegende, vergleichsweise geringfügig gewellte Hülle des Luftsacks 13 wird bei ihrer Bewegung durch die Faltkammer 17 entsprechend der Formänderung der Rippen 23, 25 zunehmend mäanderartig aufgestellt und verlässt die Faltkammer 17 über die Austrittsdüse 27 als das in Fig. 2 dargestellte, die homogene Z-Faltung aufweisende Luftsackpaket.

Dieses Luftsackpaket wird beim Austreten aus der Faltdüse 27 mittels eines nicht dargestellten, sich unmittelbar an den dargestellten Faltabschnitt anschließenden Umhüllungsabschnitts direkt in eine auch als Strumpf bezeichnete Umhüllung eingeführt, die stramm über das Luftsackpaket gezogen wird, um den gefalteten Zustand des Luftsacks 13 zu fixieren und so eine problemlose weitere Handhabung zu gewährleisten. Der Luftsack 13 kann anschließend gelagert, transportiert oder in ein Airbagmodul integriert werden, ohne dass die Gefahr einer Entfaltung besteht. Konstruktiv aufwendige und zeitraubende Maßnahmen zum Erwärmen und anschließenden Abkühlen des Luftsacks sind bei der erfindungsgemäßen Lösung nicht erforderlich, wodurch das Falten von Luftsäcken und damit die Herstellung von Airbagmodulen insgesamt schneller und kostengünstiger erfolgen kann.

### Bezugszeichenliste

- 11: Eintrittsbereich
- 13: Luftsack
- 15: Austrittsbereich
- 17: Faltkammer
- 19: Rippenstruktur
- 21: Rippenstruktur
- 23: Rippen
- 25: Rippen
- 27: Austrittsdüse
- 29: Einführöffnung
- 31: Falteinsatz
- 33: Träger
- 35: Scharnierabschnitt
- 37: Griff
- 39: Seitenwand

## Patentansprüche

1. Vorrichtung zum Falten von Luftsäcken für Kraftfahrzeuge mit einer sich ausgehend von einem Eintrittsbereich (11) für einen zumindest teilweise ausgebreiteten zu faltenden Luftsack (13) in Richtung eines Austrittsbereiches (15) für den gefalteten Luftsack (13) verkleinernden Faltkammer (17), die in einer Benutzungskonfiguration einander gegenüber liegende und jeweils von einer unveränderlichen Rippenstruktur (19, 21) gebildete Innenseiten umfasst, deren Rippen (23, 25) im Austrittsbereich (15) der Faltkammer (17) eine die Luftsackfaltung festlegende Austrittsdüse (27) für den durch die Faltkammer (17) bewegten Luftsack (13) bilden,
**dadurch gekennzeichnet,**
**dass** die Höhe zumindest einiger Rippen (23, 25) in Richtung des Austrittsbereiches (15) zunimmt.

2. Vorrichtung nach Anspruch 1,
**dadurch gekennzeichnet,**
**dass** die Rippen (23, 25) geradlinig verlaufen.

3. Vorrichtung nach Anspruch 1 oder 2,
**dadurch gekennzeichnet,**
**dass** sich zumindest einige Rippen (23, 25) vom Eintrittsbereich (11) bis zum Austrittsbereich (15) erstrecken.

4. Vorrichtung nach einem der vorhergehenden Ansprüche,
**dadurch gekennzeichnet,**
**dass** die Rippen (23, 25) in Richtung des Austrittsbereiches (15) aufeinander zu laufen.

5. Vorrichtung nach einem der vorhergehenden Ansprüche,
**dadurch gekennzeichnet,**
**dass** senkrecht zur Bewegungsrichtung des Luftsacks (13) die Rippendichte im Austrittsbereich (15) größer ist als im Eintrittsbereich (11).

6. Vorrichtung nach einem der vorhergehenden Ansprüche,
**dadurch gekennzeichnet,**
**dass** die Rippenstrukturen (19, 21) jeweils fächerartig ausgebildet sind.

7. Vorrichtung nach einem der vorhergehenden Ansprüche,
**dadurch gekennzeichnet,**
**dass** der Eintrittsbereich (11) zwischen den Rippenstrukturen (19, 21) eine sich über die gesamte Breite der Faltkammer (17) erstreckende, spalt- oder schlitzförmige Einführöffnung (29) für den Luftsack (13) aufweist.

8. Vorrichtung nach einem der vorhergehenden Ansprüche,
**dadurch gekennzeichnet,**
**dass** die Luftsackfaltung eine Z-Faltung ist.

9. Vorrichtung nach einem der vorhergehenden Ansprüche,
**dadurch gekennzeichnet,**
**dass** die Rippenstrukturen (19, 21) gegeneinander versetzt angeordnet sind.

10. Vorrichtung nach einem der vorhergehenden Ansprüche,
**dadurch gekennzeichnet,**
**dass** die Rippenstrukturen (19, 21) einander überlappungsfrei gegenüber liegen.

11. Vorrichtung nach einem der vorhergehenden Ansprüche,
**dadurch gekennzeichnet,**
**dass** zumindest bei einer der Rippenstrukturen (19, 21) in jeder senkrecht zur Bewegungsrichtung des Luftsacks (13) verlaufenden Querschnittsebene die Rippen (23, 25) die gleiche Höhe aufweisen.

12. Vorrichtung nach einem der Ansprüche 1 bis 10,
**dadurch gekennzeichnet,**
**dass** zumindest im Austrittsbereich die Rippen (23, 25) eine unterschiedliche Höhe aufweisen.

13. Vorrichtung nach einem der vorhergehenden Ansprüche,
**dadurch gekennzeichnet,**
**dass** die Rippenstrukturen (19, 21) an separaten Falteinsätzen oder als separate Falteinsätze (31) ausgebildet sind, die zur Bildung der Faltkammer (17) in eine Halterung oder einen Träger (33) einsetzbar sind.

14. Vorrichtung nach Anspruch 13,
**dadurch gekennzeichnet,**
**dass** eine Mehrzahl von Falteinsätzen (31) vorgesehen ist, die sich hinsichtlich ihrer Rippenstruktur (19, 21) voneinander unterscheiden, insbesondere hinsichtlich des senkrecht zur Bewegungsrichtung des Luftsacks (13) verlaufenden Höhenprofils der Rippen (23, 25).

15. Vorrichtung nach einem der vorhergehenden Ansprüche,
**dadurch gekennzeichnet,**
**dass** die Faltkammer (17) in der Benutzungskonfiguration seitlich offen ist.

16. Vorrichtung nach einem der vorhergehenden Ansprüche,
**dadurch gekennzeichnet,**
**dass** der Faltkammer (17) eine Umhüllungseinrichtung nachgeordnet ist, mit welcher der aus der Austrittsdüse (27) kommende gefaltete Luftsack (13) direkt in eine entsprechend dem Querschnitt der Luftsackfaltung bemessene, den gefalteten Zustand des Luftsacks (13) fixierende Umhüllung einführbar ist.

17. Verfahren zum Falten von Luftsäcken für Kraftfahrzeuge, bei dem ein zumindest teilweise ausgebreiteter zu faltender Luftsack (13) durch eine sich ausgehend von einem Eintrittsbereich (11) für den zu faltenden Luftsack (13) in Richtung eines Austrittsbereiches (15) für den gefalteten Luftsack (13) verkleinernde Faltkammer (17) bewegt wird, die in einer Benutzungskonfiguration einander gegenüber liegende und jeweils von einer unveränderlichen Rippenstruktur (19, 21) gebildete Innenseiten umfasst, deren Rippen (23, 25) im Austrittsbereich (15) der Faltkammer (17) eine die Luftsackfaltung festlegende Austrittsdüse (27) für den durch die Faltkammer (17) bewegten Luftsack (13) bilden, wobei die Höhe zumindest einiger Rippen (23, 25) in Richtung des Austrittsbereiches (15) zunimmt.

18. Verfahren nach Anspruch 17,
**dadurch gekennzeichnet,**
**dass** der aus der Austrittsdüse (27) kommende gefaltete Luftsack (13) in einer der Faltkammer (17) nachgeordneten Umhüllungseinrichtung direkt in eine entsprechend dem Querschnitt der Luftsackfaltung bemessene, den gefalteten Zustand des Luftsacks (13) fixierende Umhüllung eingeführt wird.

19. Verfahren nach Anspruch 17 oder 18,
**dadurch gekennzeichnet,**
**dass** eine Vorrichtung nach einem der Ansprüche 1 bis 17 verwendet wird.

## Claims

1. Apparatus for the folding of airbags for motor vehicles, having a folding chamber (17) which reduces in size, starting from an entry region (11) for an at least partly spread out airbag (13) to be folded, in the direction of an exit region (15) for the folded airbag (13) and which includes inner sides which are mutually oppositely disposed in a configuration of use and which are each formed by an unchanging rib structure (19, 21), the ribs (23, 25) of which form an exit nozzle (27) in the exit region (15) of the folding chamber (17), said exit nozzle determining the airbag fold for the airbag (13) moved through the folding chamber (17),
**characterized in that**
the height of at least some ribs (23, 25) increases in the direction of the exit region (15).

2. Apparatus in accordance with claim 1, **characterized in that** the ribs (23, 25) extend in a straight line.

3. Apparatus in accordance with claim 1 or claim 2, **characterized in that** at least some ribs (23, 25) extend from the entry region (11) to the exit region (15).

4. Apparatus in accordance with any one of the preceding claims, **characterized in that** the ribs (23, 25) run towards one another in the direction of the exit region (15).

5. Apparatus in accordance with any one of the preceding claims, **characterized in that** the rib density is greater perpendicular to the direction of movement of the airbag (13) in the exit region (15) than in the entry region (11).

6. Apparatus in accordance with any one of the preceding claims, **characterized in that** the rib structures (19, 21) are each fan-shaped.

7. Apparatus in accordance with any one of the preceding claims, **characterized in that** the entry region (11) has a gap-like or slit-like introduction opening (29) between the rib structures (19, 21) for the airbag (13) which extends over the entire width of the folding chamber (17).

8. Apparatus in accordance with any one of the preceding claims, **characterized in that** the airbag fold is a Z-fold.

9. Apparatus in accordance with any one of the preceding claims, **characterized in that** the rib structures (19, 21) are arranged mutually offset.

10. Apparatus in accordance with any one of the preceding claims, **characterized in that** the rib structures (19, 21) lie opposite one another without overlapping.

11. Apparatus in accordance with anyone of the preceding claims, **characterized in that**, in at least one of the rib structures (19, 21), the ribs (23, 25) have the same height in each cross-sectional plane which extends perpendicularly to the movement direction of the airbag (13).

12. Apparatus in accordance with any one of the claims 1 to 10, **characterized in that** the ribs (23, 25) have a different height at least in the exit region.

13. Apparatus in accordance with any one of the preceding claims, **characterized in that** the rib structures (19, 21) are formed at separate folding inserts or as separate folding inserts (31) which can be inserted into a holder or a carrier (33) for forming the folding chamber (17).

14. Apparatus in accordance with claim 13, **characterized in that** a plurality of folding inserts (31) is provided which differ from one another in regard to their rib structure (19, 21), in particular in regard to the height profile of the ribs (23, 25) extending perpendicular to the direction of movement of the airbag (13).

15. Apparatus in accordance with any one of the preceding claims, **characterized in that** the folding chamber (17) is open at the side in the configuration of use.

16. Apparatus in accordance with any one of the preceding claims, **characterized in that** an enveloping device is arranged after the folding chamber (17) with which the folded airbag (13) which comes from the exit nozzle (27) can be introduced directly into an envelope which is dimensioned in accordance with the cross-section of the folded airbag and which fixes the folded state of the airbag (13).

17. Method for the folding of airbags for motor vehicles, in which an at least partly spread out airbag (13) to be folded is moved through a folding chamber (17) which reduces in size, starting from an entry region (11) for the airbag (13) to be folded, in the direction of an exit region (15) for the folded airbag (13) which comprises inner sides which are mutually oppositely disposed in a configuration of use and which are formed in each case by an unchanging rib structure (19, 21), the ribs (23, 25) of which form an exit nozzle (27) in the exit region (15) of the folding chamber (17), said exit nozzle determining the airbag fold for the airbag (13) moved through the folding chamber (17), wherein the height of at least some ribs (23, 25) increases in the direction of the exit region (15).

18. Method in accordance with claim 17, **characterized in that** the folded airbag (13) which comes out of the exit nozzle (27) is introduced in an enveloping device which is arranged after the folding chamber (17) directly into an envelope which is dimensioned in accordance with the cross-section of the airbag fold and which fixes the folded state of the airbag (13).

19. Method in accordance with claim 17 or claim 18, **characterized in that** an apparatus in accordance with any one of the claims 1 to 17 is used.

## Revendications

1. Dispositif de pliage de sacs gonflables de sécurité pour véhicules automobiles, comprenant une chambre de pliage (17) qui se resserre depuis une zone d'entrée (11) pour un sac gonflable de sécurité (13) à plier, au moins partiellement étalé, en direction d'une zone de sortie (15) pour le sac gonflable de sécurité (13) plié, et qui, dans une configuration d'utilisation, comprend des faces intérieures opposées l'une à l'autre, formées chacune par une structure de nervures invariable (19, 21), dont les nervures (23, 25) dans la zone de sortie (15) de la chambre de pliage (17) forment une tuyère de sortie (27) qui définit le pliage du sac gonflable de sécurité (13) déplacé à travers la chambre de pliage (17),
**caractérisé en ce que** la hauteur d'au moins quelques unes des nervures (23, 25) augmente en direction de la zone de sortie (15).

2. Dispositif selon la revendication 1,
**caractérisé en ce que** les nervures (23, 25) s'étendent en ligne droite.

3. Dispositif selon la revendication 1 ou 2,
**caractérisé en ce qu'**au moins quelques unes des nervures (23, 25) s'étendent depuis la zone d'entrée (11) jusqu'à la zone de sortie (15).

4. Dispositif selon l'une des revendications précédentes,
**caractérisé en ce que** les nervures (23, 25) se rapprochent les unes des autres en direction de la zone de sortie (15).

5. Dispositif selon l'une des revendications précédentes,
**caractérisé en ce que** la densité de nervures, perpendiculairement à la direction de déplacement du sac gonflable de sécurité (13), est plus grande au niveau de la zone de sortie (15) qu'au niveau de la zone d'entrée (11).

6. Dispositif selon l'une des revendications précédentes,
**caractérisé en ce que** les structures de nervures (19, 21) sont réalisées chacune sous une forme planiforme.

7. Dispositif selon l'une des revendications précédentes,
**caractérisé en ce que** la zone d'entrée (11) comporte une ouverture d'introduction (29) en forme d'entrebâillement ou de fente pour le sac gonflable de sécurité (13), qui s'étend entre les structures de nervures (19, 21) sur toute la largeur de la chambre de pliage (17).

8. Dispositif selon l'une des revendications précédentes,
**caractérisé en ce que** le pliage du sac gonflable de sécurité est un pliage en Z.

9. Dispositif selon l'une des revendications précédentes,
**caractérisé en ce que** les structures de nervures (19, 21) sont disposées de façon décalée les unes par rapport aux autres.

10. Dispositif selon l'une des revendications précédentes,
**caractérisé en ce que** les structures de nervures (19, 21) se situent en face l'une de l'autre sans se chevaucher.

11. Dispositif selon l'une des revendications précédentes,
**caractérisé en ce que** dans l'une au moins des structures de nervures (19, 21), les nervures (23, 25) présentent la même hauteur dans un plan de section transversale s'étendant perpendiculairement au sens de déplacement du sac gonflable de sécurité (13).

12. Dispositif selon l'une des revendications 1 à 10,
**caractérisé en ce que** les nervures (23, 25) présentent une hauteur différente au moins au niveau de la zone de sortie.

13. Dispositif selon l'une des revendications précédentes,
**caractérisé en ce que** les structures de nervures (19, 21) sont conformées sur des inserts de pliage séparés, ou réalisées sous forme d'inserts de pliage séparés (31), qui peuvent être insérés dans un dispositif de maintien ou un support (33) de manière à former une chambre de pliage (17).

14. Dispositif selon la revendication 13,
**caractérisé en ce qu'**une multitude d'inserts de pliage (31) est prévue, qui se distinguent les uns des autres en ce qui concerne leurs structures de nervures (19, 21), en particulier en ce qui concerne le profil de hauteur des nervures (23, 25), qui s'étend perpendiculairement au sens de déplacement du sac gonflable de sécurité (13).

15. Dispositif selon l'une des revendications précédentes,
**caractérisé en ce que** la chambre de pliage (17) est latéralement ouverte dans sa configuration d'utilisation.

16. Dispositif selon l'une des revendications précédentes,
**caractérisé en ce qu'**un dispositif d'enveloppement est aménagé en aval de la chambre de pliage (17), où le sac gonflable de sécurité (13) plié, sortant de la tuyère de sortie (27), peut être introduit directement dans une enveloppe dimensionnée en fonction de la section transversale du sac gonflable plié, fixant ainsi l'état plié du sac gonflable de sécurité (13).

17. Procédé de pliage de sacs gonflables de sécurité pour véhicules automobiles, dans lequel un sac gonflable de sécurité (13) à plier, au moins partiellement étalé, est déplacé à travers une chambre de pliage (17) qui se resserre depuis une zone d'entrée (11) pour le sac gonflable de sécurité (13) à plier, en direction d'une zone de sortie (15) pour le sac gonflable de sécurité (13) plié, et qui, dans sa configuration d'utilisation, comprend des faces intérieures opposées l'une à l'autre, formées chacune par une structure de nervures invariable (19, 21), dont les nervures (23, 25) forment, au niveau de la zone de sortie (15) de la chambre de pliage (17), une tuyère de sortie définissant le pliage du sac gonflable de sécurité pour le sac gonflable de sécurité (13) déplacé à travers la chambre de pliage (17), la hauteur d'au moins quelques unes des nervures (23, 25) augmentant en direction de la zone de sortie (15).

18. Procédé selon la revendication 17,
**caractérisé en ce que** le sac gonflable de sécurité (13) plié, sortant de la tuyère de sortie (27), est directement inséré dans une enveloppe dimensionnée en fonction de la section transversale du pliage du sac gonflable de sécurité, fixant ainsi l'état plié du sac gonflable de sécurité (13), dans un dispositif d'enveloppement aménagé en aval de la chambre de pliage (17).

19. Procédé selon la revendication 17 ou 18,
**caractérisé en ce qu'**il met en oeuvre un dispositif selon l'une quelconque des revendications 1 à 17.
